# EUROPEAN PATENT SPECIFICATION

(11) **EP 1 833 178 B1**
(45) Date of publication and mention of the grant of the patent: **19.06.2013**
(21) Application number: 06300219.0
(22) Date of filing: 10.03.2006
(51) Int. Cl.: H04W 56/00

(54) **Method for operating a time division multiplex system and corresponding base station**
Verfahren zum Betrieb eines Zeitmultiplexsystems und entsprechende Feststation
Procédé pour exploiter un système de multiplexage par répartition dans le temps et station de base correspondante

(43) Date of publication of application: 12.09.2007
(73) Proprietor: Alcatel Lucent, 75007 Paris (FR)
(72) Inventor: Lange, Keld, Dr., 75443 Ötisheim (DE)
(74) Representative: Wetzel, Emmanuelle

(56) References cited:
- EP-A- 0 661 836
- EP-A- 1 213 855

## Description

### BACKGROUND OF THE INVENTION

The present invention relates to a method for operating a time division multiplex system.

TDD systems are based on the fact that a part of the frame is used for downlink transmission while the rest of the frame is used for uplink reception. In such systems, a perfect synchronisation is required between the different base stations to avoid that the system fails. This synchronisation is usually ensured thanks to a central clock source made available at all base stations. Possible failure of this central clock should be considered and handled by the system in order to avoid a total failure of the system.

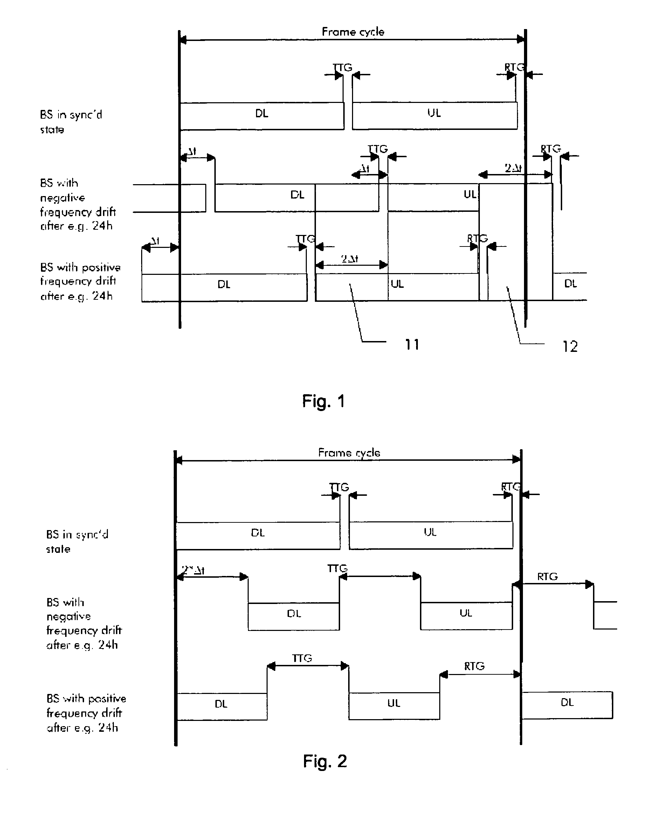

Figure 1 shows the effect of a central clock loss in a prior art TDD frame structure.

In TDD radio systems, a period of time called TDD frame is composed of four subperiods:
- DL: Transmit time of base station, receive time of mobile
- TTG: Gap to allow the transmitter to shut off
- UL: Receive time of base station, transmit time of mobile
- RTG: Gap to allow the transmitter to ramp up.

In case of central clock loss, the downlink and uplink time periods of different base stations overlap and the whole radio network foils. Figure 1 shows a situation where two base stations have lost the central clock synchronization for a while. The result of this is that both local oscillators are no more controlled and are drifting from the nominal frequency given by the central clock. In the worst case, the local oscillator of the first base station is running at frequency fnom+Δf while the oscillator of the second

base station is running at fnom-Δf wherein a synchronized base station is running exactly at fnom.

The result of the frequency drift is that a part of the time period reserved for the downlink communication at the first base station overlaps with a part of the time period reserved for the uplink communication at the second base station. (see fields 11, 12).

During these overlap periods the radio system fails completely. Moreover in some TDD systems like WIMAX, this overlap periods contain preamble and maps which are mandatory for execution resulting in a complete system fail with no recovery possible.

A prior art solution for compensating for central clock failure consists in installing a very precise Rubidium clock oscillator in the base stations so that if the usual central clock source fail the base station may remain synchronised up to 24 hours.

This solution is very reliable but also very expensive since a Rubidium clock oscillator would represent 10 - 20 % of the whole base station cost.

In EP 1 213 855 A1 a Node B base station of a UMTS/UTRAN system operating a radio cell in TDD mode defines a guard period for a downlink slot followed by an adjacent uplink slot to be longer than a guard period for an uplink slot followed by an adjacent downlink slot. The guard period for the downlink slot is increased and the guard period for the uplink slot is decreased in order to extend the size of the radio cell.

A particular object of the present invention is to provide a method guarantying a sufficient synchronization in TDD systems in case the central clock experience a failure.

Another object of the invention is to provide a corresponding base station.

### SUMMARY OF THE INVENTION

These objects, and others that appear below, are achieved by a method for operating a time division multiplex system according to claim 1, and a base station according to claim 5.

According to the present invention, the structure of a TDD frame is dynamically modified to avoid that the system fails when the central clock is

lost. The modification consists in dynamically extending the guard time durations in dependence of the frequency drift of the base station.

The method according to the present invention presents the advantage to provide for a robust solution for handling the loss of the central clock in a TDD system, which often do not exceed some hours.

The present invention is especially advantageous in WIMAX in which the zones of the frame which may be subject to overlap after a synchronization loss contain preambles or maps which are mandatory for the operations. A solution as proposed would ovoid radio system failure.

Another advantage of the present invention is that the solution is cost effective solution since it does not require any expensive hardware but only a software implementation.

Further advantageous features of the invention are defined in the dependent claims.

Brief Description of the Drawings

Other characteristics and advantages of the invention will appear on reading the following description of a preferred embodiment given by way of non-limiting illustrations, and from the accompanying drawings, in which:
- Figure 1 shows the effect of a central clock loss in a prior art TDD frame structure;
- Figure 2 shows the effect of a central clock loss using a dynamic TDD frame structure according to the present invention;
- Figure 3 shows a base station according to the present invention;

Detailed Description of the Invention

Figure 1 has already been described in connection with prior art.

Figure 2 shows a system with two base station having lost the central clock loss using a dynamic TDD frame structure according to the present invention vs one synchronized base station.

The synchronized base station shows the same duration for the time intervals:
- DL: Transmit time of base station, receive time of mobile
- TTG: Gap to allow the transmitter to shut off
- UL: Receive time of base station, transmit time of mobile
- RTG: Gap to allow the transmitter to ramp up;

as in prior art.

According to the present invention, upon detection of synchronization loss at a base station this base station dynamically adapt the duration of the guard times TTG, RTG by increasing this duration according to the time drift of the base station.

Preferably, the maximum time drift of the base station can be evaluated as a function of the duration since the central clock loss and of the worst case frequency deviation of the local oscillator. The latter is a quantity given a local oscillator parameter. Each base station having a failed synchronization link assumes that its local oscillator is running at fnom-Δf. Consequently, the base station adapts its local TTG and RTG length in order that no DL resp UL overlaps with any UL resp DL of other base stations.

The proposed solution is to adapt the TTG and RTG gap times dynamically according to the time drift Δt.(an upper bound of the time drift can be obtained as a function of the synchronization loss duration and of the worst case frequency drift of the oscillator)

The TTG is enlarged from its nominal value TTGₙₒₘ to TTG= TTGₙₒₘ + 2*Δt, the RTG is increased similarly. Each Base station having a failed synchronization link assumes that it's local oscillator will run at fₙₒₘ-Δf. The BS will adopt its local frame length according to fₙₒₘ-Δf.

This guarantees that no overlaps between DL and UL times of any synchronized or unsynchronized BS happens. The radio network will stay olive.

Consequently, the throughput of the system is reduced during the time where the central clock loss is lost. Nevertheless a reduced throughput is less harmful than a complete system failure.

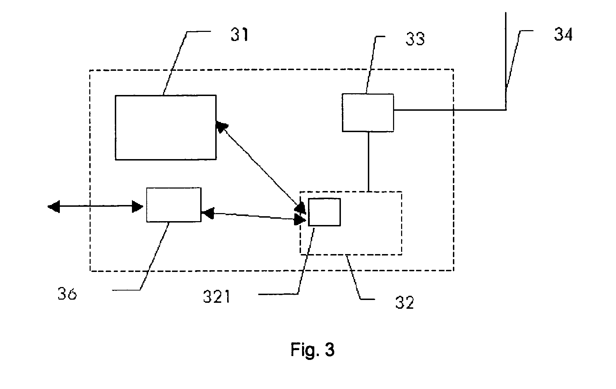

Figure 3 shows a base station according to the present invention. The base station is adapted to be operated in an time division duplex mode (TDD) so that during a period of time the base station has a transmit time period DL, followed by a guard time period TTG for the transmitter to shut off, followed by a receive time period itself followed by a guard time to allow the base station transmitter to ramp up.

The base station comprises a local oscillator 31 for synchronization purpose and a transmit/receive unit 32 connected to a RF module 33 and an antenna 34.

According to the present invention, the base station comprises means 321 for increasing said first and/or second guard time durations as a function of the frequency drift of said base station upon detection of a

synchronization loss at said base station. Preferably means 321 are part of transmit receive unit 32 but may be located outside of it. Additionally, the base station may comprise means 35 for detecting a synchronization loss of the base station. Means 35 are connected to local oscillator 31 and cooperate with means 321 in order to trigger the increasing of the guard time duration upon detection of a synchronization loss. Alternatively, base station may use means 36 for receiving an information related to a synchronization loss over a predefined interface. In this case, the base station is not itself responsible for the detection of its own synchronization loss but may be informed of it by a central network entity.

Advantageously, local oscillator 31 of a base station according to the present invention is an oven controlled crystal oscillator. Indeed oven controlled oscillators are cheap components which could be very efficiently used together with the present invention. This would reduce the costs of the base station drastically compared to base station using expensive Rubidium oscillators.

The present invention would also apply to a base station controller in systems in which several base stations are controlled by a common entity, this entity being responsible for system scheduling. Nevertheless the invention is most advantageous in systems with decentralized base stations.

## Claims

1. A method for operating a time division duplex system, said time division duplex system comprising a frame cycle with a period of time for downlink transmission (DL) at a base station, a first guard time (TTG), a period of time for uplink reception (UL) at said base station, and a second guard time (RTG),
said method comprising the step of increasing duration of said first and second guard times (TTG, RTG) at said base station according to a time drift of said base station upon detection of a synchronization loss at said base station and modifying said guard time durations (TTG, RTG) dynamically.

2. The method according to claim 1, said synchronization loss being detected at said base station.

3. The method according to claim 1, said method further comprising the step of receiving an information related to a synchronization loss over a predefined interface of said base station.

4. The method according to claim 1, said first guard time (TTG) and said second guard time (RTG) being increased as a function of a frequency drift of said base station.

5. The method according to claim 1, said frequency drift being determined as a function of the time since the beginning of the synchronization loss and of a parameter related to frequency deviation of a local oscillator (31) of said base station.

6. A base station adapted to be operated in a time division duplex mode in a radio communication network, said base station comprising a local oscillator (31) for synchronization purpose,
said base station further comprising
- means for increasing duration of first and second guard times (TTG, RTG) of a frame cycle according to a time drift of said base station upon detection of a synchronization loss at said base station, and
- for modifying said guard time durations (TTG, RTG) dynamically.

7. The base station according to claim 6, said base station further comprising means (36) for detecting a synchronization loss at said base station.

8. The base station according to claim 6, said base station further comprising means (36) for receiving an information related to said synchronization loss over a predefined interface.

9. The base station according to claim 6, said local oscillator (31) being an oven controlled crystal oscillator.

## Patentansprüche

1. Verfahren zum Betrieb eines Zeitduplexsystems, wobei das besagte Zeitduplexsystem einen Rahmenzyklus mit einer Zeitspanne für Downlink-Übertragungen (DL) an einer Basisstation, einer ersten Schutzzeit (TTG), einer Zeitspanne für den Uplink-Empfang (UL) an der besagten Basisstation und einer zweiten Schutzzeit (RTG) umfasst,
wobei das besagte Verfahren den Schritt des Erhöhens der Dauer der besagten ersten und zweiten Schutzzeit (TTG, RTG) an der besagten Basisstation gemäß einer Zeitabweichung der besagten Basisstation bei Erkennen eines Synchronisationsverlustes an der besagten Basisstation und des dynamischen Modifizierens der besagten Dauer der Schutzzeiten (TTG, RTG) umfasst.

2. Verfahren nach Anspruch 1, wobei der besagte Synchronisationsverlust an der besagten Basisstation erkannt wird.

3. Verfahren nach Anspruch 1, wobei das besagte Verfahren weiterhin den Schritt des Empfangens einer Information in Bezug auf einen Synchronisationsverlust über eine vordefinierte Schnittstelle der besagten Basisstation umfasst.

4. Verfahren nach Anspruch 1, wobei die besagte erste Schutzzeit (TTG) und die besagte zweite Schutzzeit (RTG) in Abhängigkeit von einer Frequenzverschiebung der besagten Basisstation erhöht werden.

5. Verfahren nach Anspruch 1, wobei die besagte Frequenzverschiebung in Abhängigkeit von der seit dem Beginn des Synchronisationsverlustes vergangenen Zeit und von einem die Frequenzabweichung eines lokalen Oszillators (31) der besagten Basisstation betreffenden Parameter ermittelt wird.

6. Basisstation, ausgelegt für den Betrieb In einem Zeltduplexmodus in einem Funkkommunikationsnetzwerk, wobei die besagte Basisstation einen lokalen Oszillator (31) zum Zweck der Synchronisation umfasst,
wobei die besagte Basisstation weiterhin umfasst:
- Mittel zum Erhöhen der Dauer der ersten und der zweiten Schutzzeit (TTG, RTG) eines Rahmenzyklus gemäß einer Zeitabweichung der besagten Basisstation bei Erkennen eines Synchronisationsverlustes an der besagten Basisstation, und zum dynamischen Modifizieren der besagten Dauer der Schutzzeiten (TTG, RTG).

7. Basisstation nach Anspruch 6, wobei die besagte Basisstation weiterhin Mittel (36) zum Erkennen eines Synchronisationsverlustes an der besagten Basisstation umfasst.

8. Basisstation nach Anspruch 6, wobei die besagte Basisstation weiterhin Mittel (36) zum Empfangen einer Information in Bezug auf den besagten Synchronisationsverlust über eine vordefinierte Schnittstelle umfasst.

9. Basisstation nach Anspruch 6, wobei der besagte lokale Oszillator (31) ein ofengesteuerter Quarzoszillator ist.

## Revendications

1. Procédé d'exécution d'un système de duplexage par répartition dans le temps, ledit système de duplexage par répartition dans le temps comprenant un cycle de trame avec une période pour la transmission de liaison descendante (DL) au niveau d'une station de base, un premier temps de garde (TTG), une période pour la réception de liaison montante (UL) au niveau de ladite station de base, et un deuxième temps de garde (RTG),
ledit procédé comprenant l'étape d'augmentation de la durée desdits premier et deuxième temps de garde (TTG, RTG) au niveau de ladite station de base conformément à une dérive temporelle de ladite station de base lors de la détection d'une perte de synchronisation au niveau de ladite station de base et de modification dynamique desdites durées de temps de garde (TTG, RTG).

2. Procédé selon la revendication 1, ladite perte de synchronisation étant détectée au niveau de ladite station de base.

3. Procédé selon la revendication 1, ledit procédé comprenant en outre l'étape de réception d'une information relative à une perte de synchronisation sur une interface prédéfinie de ladite station de base.

4. Procédé selon la revendication 1, ledit premier temps de garde (TTG) et ledit deuxième temps de garde (RTG) étant augmentés en fonction d'une dérive de fréquence de ladite station de base.

5. Procédé selon la revendication 1, ladite dérive de fréquence étant déterminée en fonction du temps écoulé depuis le début de la perte de synchronisation et d'un paramètre lié à l'écart de fréquence d'un oscillateur local (31) de ladite station de base.

6. Station de base adaptée pour être exécutée dans un mode de duplexage par répartition dans le temps dans un réseau de radiocommunication, ladite station de base comprenant un oscillateur local (31) à des fins de synchronisation,
ladite station de base comprenant en outre
- des moyens pour augmenter la durée des premier et deuxième temps de garde (TTG, RTG) d'un cycle de trame conformément à une dérive temporelle de ladite station de base lors de la détection d'une perte de synchronisation au niveau de ladite station de base, et pour modifier dynamiquement lesdites durées de temps de garde (TTG, RTG).

7. Station de base selon la revendication 6, ladite station de base comprenant en outre des moyens (36) pour détecter une perte de synchronisation au niveau de ladite station de base.

8. Station de base selon la revendication 6, ladite station de base comprenant en outre des moyens (36) pour recevoir une information relative à ladite perte de synchronisation sur une interface prédéfinie.

9. Station de base selon la revendication 6, ledit oscillateur local (31) étant un oscillateur à quartz thermostaté.
